# EUROPÄISCHE PATENTSCHRIFT

(11) **EP 1 653 168 B1**
(45) Veröffentlichungstag und Bekanntmachung des Hinweises auf die Patenterteilung: **11.03.2009**
(21) Anmeldenummer: 05021592.0
(22) Anmeldetag: 04.10.2005
(51) Int. Cl.: F25B 17/08

(54) **Vakuum-Sorptionsvorrichtung**
Vacuum sorption device
Dispositif à sorption et à vide

(30) Priorität: 08.10.2004 DE 102004049409
(43) Veröffentlichungstag der Anmeldung: 03.05.2006
(73) Patentinhaber: Viessmann Werke GmbH & Co KG, 35107 Allendorf (DE)
(72) Erfinder: Stricker, Dr. Marc, 35037 Marburg (DE)
(74) Vertreter: Wolf, Günter

(56) Entgegenhaltungen:
- EP-A- 0 272 031
- DE-A1- 10 214 216
- DE-B3- 10 310 748
- US-A- 2 904 969

## Beschreibung

Die Erfindung betrifft eine Vakuum-Sorptionsvorrichtung gemäß dem Oberbegriff des Patentanspruchs 1.

Derartige Vakuum-Sorptionsvorrichtungen umfassen eine beispielsweise als Brenner ausgebildete Wärmequelle mit einem ersten Wärmetauscher und einen aus einem Sorptionsmittel (beispielsweise Zeolith) und einem zweiten Wärmetauscher bestehenden, periodisch ein Kältemittel ad- oder desorbierenden Sorber. Diesbezüglich wird auf die EP 0 272 031, DE 103 10 748 B3, DE 102 17 443 A1 und DE 199 02 695 A1 verwiesen, wobei in allen Fällen die Wärmetauscher zur Wärmeübertragung vom Brenner auf den Sorber über einen mit einem flüssigen Wärmeträger befüllten Wärmeträgerkreislauf miteinander verbunden sind.

Gemäß der DE 102 17 443 A1 ist darüber hinaus vorgesehen, dass der wärmeträgerkreislauf der vakuum-Sorptionsvorrichtung unmittelbar mit einem Heizkreislauf eines Gebäudes verbunden ist; es besteht also keine hydraulisch Trennung zwischen diesen beiden Kreisläufen, d. h. es existiert regelmäßig kein dritter Wärmetauscher im wärmeträgerkreislauf.

Da derartige Vakuum-Sorptionsvorrichtungen, wie eingangs erwähnt, periodisch arbeiten und sich dabei insbesondere die Temperatur des Wärmeträgers (Wärmeträgermediums) ändert, ergibt sich bei der DE 103 10 748 B3 und der DE 199 02 695 A1 der Nachteil, dass auch die mit dem Wärmeträger in Berührung stehenden bzw. kommenden Bauteile während des periodischen Betriebs aufgeheizt bzw. abgekühlt werden müssen. Hiervon sind insbesondere der erste Wärmetauscher an der Wärmequelle (wie erwähnt: regelmäßig ein Brenner) und, falls vorbanden, der dritte, den Wärmeträgerkreislauf thermisch mit dem Heizkreislauf verbindende Wärmetauscher betroffen. Hierdurch erfährt der Prozess eine Einbuße des Wirkungsgrades.

Gemäß der DE 102 17 443 A1 ist daher vorgesehen, dass der erste Wärmetauscher der Wärmequelle bei adsorbierendem Sorber mittels eines Bypasses aus dem Wärmeträgerkreislauf auskoppelbar ausgebildet ist.

Ist ein hydraulisch getrennter Heizkreislauf vorhanden, so kann außerdem vorgesehen sein, dass wahlweise der erste und/oder der dritte Wärmetauscher jeweils mittels eines Bypasses aus dem wärmeträgerkreislauf auskoppelbar ausgebildet ist/sind. Dabei ist die "und"-Variante offensichtlich die zu bevorzugende, wobei auch bereits mit der "oder"-Variante eine deutliche Steigerung des Wirkungsgrades erreichbar ist.

Diese Maßgaben gemäß der DE 102 17 443 Al gewährleisten, dass jeweils mindestens einer der Wärmetauscher während der entsprechenden Phase aus dem wärmeträgerkreislauf ausgekoppelt und somit dem Temperaturhub während dieser Phase nicht ausgesetzt ist. Vielmehr behält der jeweilige Wärmetauscher über den in ihm in dieser Phase gespeicherte Wärmeträger seine Temperatur bei und kann mit dieser Temperatur dann im nächsten Zyklus wieder teilnehmen.

Zur Verbindung des Wärmetauschers des Sorbers mit dem Wärmetauscher der Wärmequelle ist gemäß der DE 102 17 443 A1 ein Heizkreisverteiler mit Heizkreislaufventilen vorgesehen. Die Heizkreislaufventile sind dabei als kostenintensive Motor-3-Wege-Ventile ausgebildet.

Der Erfindung liegt die Aufgabe zugrunde, bei einer Vakuum-Sorptionsvorrichtung der eingangs genannten Art die konstruktiv aufwendige und kostenintensive Ausbildung des Heizkreisverteilers zu vereinfachen.

Diese Aufgabe ist mit einer Vakuum-Sorptionsvorrichtung der eingangs genannten Art durch die im Kennzeichen des Patentanspruchs 1 aufgeführten Merkmale gelöst.

Nach der Erfindung ist also vorgesehen, dass am Zu- und am Abfuhranschluss des Wärmetauschers jeweils eine den Bypass bildende hydraulische Abzweigung angeordnet ist, wobei am Zufuhranschluss zwischen der zufuhranschlußseitigen Abzweigung und dem Wärmetauscher eine Pumpe, am Abfuhranschluss zwischen der abfuhranschlußseitigen Abzweigung und dem Wärmetauscher ein erstes, in Richtung Wärmetauscher sperrendes Rückschlagventil und am Bypass ein zweites, in Richtung Zufuhranschluss sperrendes Rückschlagventil vorgesehen sind, wobei das erste Rückschlagventil einen im Vergleich zum Druckverlust über den Bypass größeren Öffnungsdruck aufweist. Mittels dieser Konstruktion kann bei Verwendung einfacher Rückschlagventile auf ansonsten erforderliche, kostenintensive Dreiwegeventile verzichtet werden.

Bei dieser Konstruktion sind somit lediglich einfache Rückschlagventile und keine kostenintensiven Motor-3-Wege-Ventile erforderlich.

Andere vorteilhafte Weiterbildungen ergeben sich nach den abhängigen Patentansprüchen.

Die erfindungsgemäße Vakuum-Sorptionsvorrichtung einschließlich ihrer vorteilhaften Weiterbildungen gemäß der abhängigen Patentansprüche wird nachfolgend anhand der zeichnerischen Darstellung zweier Ausführungsbeispiele näher erläutert.

Es zeigt
- Figur 1: schematisch die erfindungsgemäße Vakuum-Sorptionsvorrichtung, bei der der Wärmeträgerkreislauf gleichzeitig den Heizkreislauf bildet; und
- Figur 2: die erfindungsgemäße Vakuum-Sorptionsvorrichtung, bei der Wärmeträger- und Heizkreislauf mittels eines Wärmetauschers voneinander getrennt sind.

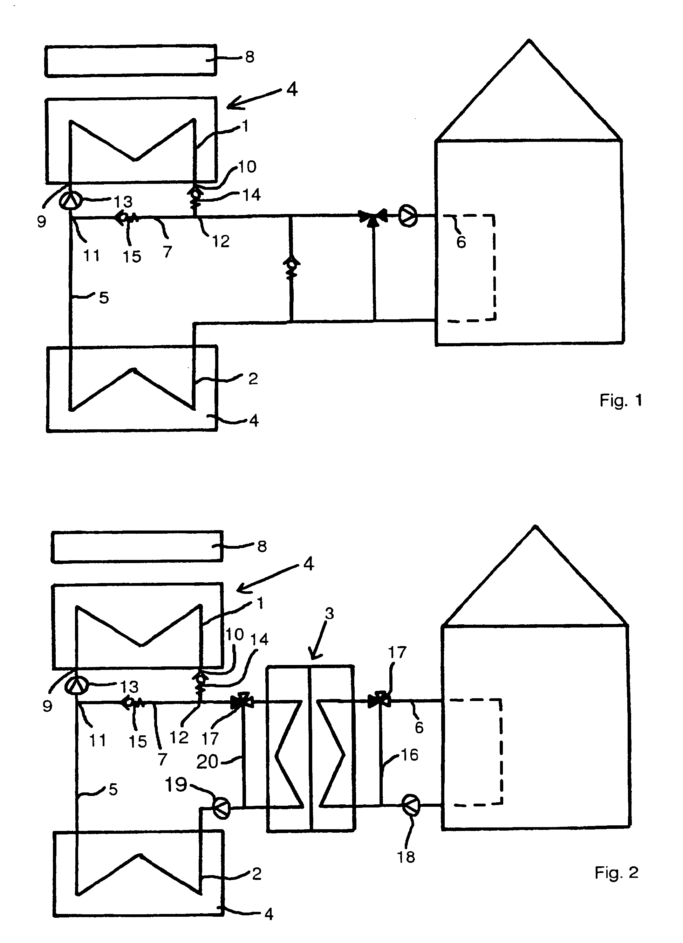

Die in Figur 1 dargestellte Vakuum-Sorptionsvorrichtung umfasst eine Wärmequelle 8 (vorzugsweise einen Gasbrenner) mit einem ersten Wärmetauscher 1, einen aus einem Sorptionsmittel (vorzugsweise Zeolith) und einem zweiten Wärmetauscher 2 bestehenden, periodisch ein Kältemittel (beispielsweise Wasser) ad- oder desorbierenden Sorber 4 und einen mit einem Wärmeträgermedium befüllten, die Wärmetauscher 1, 2 miteinander verbindenden wärmeträgerkreislauf 5. Der erste Wärmetauscher 1 der Wärmequelle 8 weist einen Zu- 9 und einen Abfuhranschluss 10 auf und ist bei adsorbierendem Sorber 4 mittels eines Bypasses 7 aus dem Wärmeträgerkreislauf 5 auskoppelbar ausgebildet.

### Diese Vorrichtung funktioniert wie folgt:

In der Desorptionsphase wird mittels der Wärmequelle 8 Wärme auf den ersten Wärmetauscher 1 und damit auf das im Wärmeträgerkreislauf 5 befindliche Wärmeträgermedium übertragen. Diese Wärme gibt das Wärmeträgermedium im zweiten Wärmetauscher 2 an das am Sorber 4 angeordnete Sorptionsmittel ab. Das in dieser Phase vom Sorptionsmittel adsorbierte Kältemittel wird aufgrund der Wärmezufuhr freigesetzt, d. h. desorbiert, wobei die Wärmezufuhr regelmäßig solange erfolgt, bis vom Soptionsmittel kein Kältemittel mehr adsorbiert ist.

in der Adsorptionsphase liefert die Wärmequelle 8 keine Wärme, d. h. beispielsweise, dass. der Brenner ausgeschaltet ist. Stattdessen wird das Kältemittel dampfförmig in den Bereich des Sorbers 4 gebracht, so dass das Sorptionsmittel dieses adsorbieren kann. Die dabei anfallende Wärme steht zur weiteren Verwendung frei zur Verfügung und wird über den zweiten Wärmetauscher 2 abgeführt.

Im Sinne der DE 102 17 443 A1 ist, wie erwähnt, auch bei dieser Ausführungsform vorgesehen, dass der erste Wärmetauscher 1 der Wärmequelle 8 bei adsorbierendem Sorber 4, also wenn die Wärmequelle 8 keine Wärme liefert, mittels eines Bypasses 7 aus dem Wärmeträgerkreislauf 5 auskoppelbar ausgebildet ist.

Diese Maßgabe gewährleistet, dass jedenfalls der erste Wärmetauscher und das im ersten Wärmetauscher vorhandene Wärmeträgermedium nicht an dem Temperaturhub zwischen Ad- und Desorptionsphase teilnehmen, d. h. dieser Teil des Wärmeträgermedium bleibt stets auf einem relativ hohen Temperaturniveau, während gleichzeitig der andere Teil des Wärmeträgermediums (bei einem tieferen Temperaturniveau) die in der Adsorptionsphase anfallende Wärme an einen Verbraucher (beispielsweise an einen Heizkreislauf) abgibt.

Wesentlich für die erfindungsgemäße Vakuum-Sorptionsvorrichtung ist nun, dass am Zu- 9 und am Abfuhranschluss 10 des Wärmetauschers 1 jeweils eine den Bypass 7 bildende hydraulische Abzweigung 11, 12 angeordnet ist, wobei am Zufuhranschluss 9 zwischen der zufuhranschlußseitigen Abzweigung 11 und dem Wärmetauscher 1 eine Pumpe 13, am Abfuhranschluss 10 zwischen der abfuhranschlußseitigen Abzweigung 12 und dem Wärmetauscher 1 ein erstes, in Richtung Wärmetauscher 1 sperrendes Rückschlagventil 14 und am Bypass 7 ein zweites, in Richtung zufuhranschluss 9 sperrendes Rückschlagventil 15 vorgesehen sind, wobei das erste Rückschlagventil 14 einen im Vergleich zum Druckverlust über den Bypass 7 größeren Öffnungsdruck aufweist.

Diese Maßgabe ermöglicht eine konstruktiv möglichst einfache Gestaltung des Bypasses 7 und funktioniert wie folgt:

In der Desorptionsphase ist die Pumpe 13 eingeschaltet und fördert das Wärmeträgermedium durch den ersten Wärmetauscher 1. Das am Abfuhranschluss 10 angeordnete Rückschlagventil 14 ist so ausgelegt, dass es aufgrund des von der Pumpe 13 erzeugten Druckes öffnet und das Wärmeträgermedium passieren läßt. Das Rückschlagventil 15 im Bypass 7 bleibt verschlossen, da es saugseitig zur Pumpe 13 angeordnet ist und somit kein Druck anliegt, der dieses Rückschlagventil 15 öffnen könnte.

In der Adsorptionsphase ist die Pumpe 13 abgeschaltet. Das vom zweiten Wärmetauscher 2 kommende Wärmeträgermedium kann an der Abzweigung 11 entweder in Richtung Pumpe 13 oder in den Bypass strömen. Da allerdings das am Abfuhranschluss 10 vorgesehene Rückschlagventil 14 einen größeren Öffnungsdruck als das im Bypass 7 angeordnete Rückschlagventil 15 aufweist, wird das Wärmeträgermedium ausnahmslos über den somit den geringeren Druckverlust aufweisenden Bypass 7 strömen, d. h. die zueinander angepaßte Ausbildung der Rückschlagventile 14, 15 gewährleistet automatisch die richtige Strömungslenkung in der Adsorptionsphase.

Wie in Figur 1 dargestellt, besteht eine andere, besonders bevorzugte und schon erwähnte Weiterbildung der erfindungsgemässen Vakuum-Sorptionsvorrichtung darin, dass der Wärmeträgerkreislauf 5 gleichzeitig als Heizkreislauf ausgebildet ist. In diesem Fall strömt somit das Wärmeträgermedium nicht nur durch die beiden Wärmetauscher 1 und 2, sondern gleichzeitig auch durch den Heizkreislauf beispielsweise eines Gebäudes (zeichnerisch angedeutet). Es wird somit erfindungsgemäß auf eine hydraulische Trennung von Wärmeträger- und Heizkreislauf verzichtet, was technisch allerdings voraussetzt, dass der eigentliche Heizkreislauf dem vergleichsweise etwas höheren Druck des damit unmittelbar verbundenen wärmeträgerkreislaufes standhält. - Diese Bedingung ist aber erfahrungsgemäß bei allen neueren Heizkreisläufen erfüllt.

Bezüglich der Anordnung der genannten Komponenten ist bei der bevorzugten Ausführungsform darüber hinaus vorgesehen, dass der erste Wärmetauscher 1 ausgangsseitig mit dem Heizkreislauf, dieser mit dem zweiten Wärmetauscher 2 eingangsseitig und dieser ausgangsseitig mit dem ersten Wärmetauscher 1 eingangsseitig verbunden ist.

In Figur 2 ist eine weitere Ausführungsform der erfindungsgemäßen Vakuum-Sorptionsvorrichtung dargestellt, bei der Wärmeträger- und Heizkreislauf mittels eines Wärmetauschers 3 voneinander getrennt sind. Die Funktion der Vakuum-Sorptionsvorrichtung ist im Übrigen aber die gleiche.

Bei dieser Ausführungsform ist ferner vorteilhaft vorgesehen, dass der dritte Wärmetauscher 3 einerseits mittels eines weiteren Bypasses 16 aus dem vorzugsweise mit einer Pumpe 18 versehenen Heizkreislauf 6 und andererseits mittels eines Bypasses 20 aus dem Wärmeträgerkreislauf 5 auskoppelbar ausgebildet ist. Mittels dieser Konstruktion kann der Wärmetauscher 3 in der entsprechenden Phase vor einem unnötigen Temperaturhub und damit entsprechendem Wärmeverlust bewahrt werden.

Bezüglich der Anordnung der genannten Komponenten ist bei der zweiten Ausführungsform gemäß Figur 2 schließlich vorzugsweise vorgesehen, dass der erste Wärmetauscher 1 ausgangsseitig mit dem dritten Wärmetauscher 3 eingangseitig, dieser ausgangsseitig mit dem zweiten Wärmetauscher 2 eingangseitig und dieser ausgangsseitig mit dem ersten Wärmetauscher 1 eingangseitig verbunden ist, wobei der dritte Wärmetauscher 3 darüber hinaus - hydraulisch vom vorzugsweise mit einer Pumpe 19 versehenen Wärmeträgerkreislauf 5 getrennt - mit dem Heizkreislauf 6 verbunden ist.

### Bezugszeichenliste

- 1: Wärmetauscher
- 2: Wärmetauscher
- 3: Wärmetauscher
- 4: Sorber
- 5: Wärmeträgerkreislauf
- 6: Heizkreislauf
- 7: Bypass
- 8: Wärmequelle
- 9: Zufuhranschluss
- 10: Abfuhranschluss
- 11: Abzweigung
- 12: Abzweigung
- 13: Pumpe
- 14: Rückschlagventil
- 15: Rückschlagventil
- 16: Bypass
- 17: Dreiwegeventil
- 18: Pumpe
- 19: Pumpe
- 20: Bypass

## Patentansprüche

1. Vakuum-Sorptionsvorrichtung, umfassend eine Wärmequelle (8) mit einem ersten Wärmetauscher (1), einen aus einem Sorptionsmittel und einem zweiten Wärmetauscher (2) bestehenden, periodisch ein Kältemittel ad- oder desorbierenden Sorber (4) und einen mit einem Wärmeträgermedium befüllten, die Wärmetauscher (1, 2) miteinander verbindenden Wärmeträgerkreislauf (5), wobei der erste Wärmetauscher (1) der Wärmequelle (8) einen Zu- (9) und einen Abfuhranschluss (10) aufweist und bei adsorbierendem Sorber (4) mittels eines Bypasses (7) aus dem Wärmeträgerkreislauf (5) auskoppelbar ausgebildet ist, wobei
am Zu- (9) und am Abfuhranschluss (10) jeweils eine den Bypass (7) bildende hydraulische Abzweigung (11, 12) vorgesehen ist, am Abfuhranschluss (10) zwischen der abfuhranschlußseitigen Abzweigung (12) und dem Wärmetauscher (1) ein erstes, in Richtung Wärmetauscher (1) sperrendes Rückschlagventil (14) und am Bypass (7) ein zweites, in Richtung Zufuhranschluss (9) sperrendes Rückschlagventil (15) vorgesehen sind, **dadurch gekennzeichnet dass** das erste Rückschlagventil (14) einen im Vergleich zum Druckverlust über den Bypass (7) größeren Öffnungsdruck aufweist, und dass am Zufuhranschluss zwischen der Zufuhranschlußseitigen Abzweigung und dem Wärmetauscher eine pumpe vorgesehen ist.

2. Vakuum-Sorptionsvorrichtung nach Anspruch 1,
**dadurch gekennzeichnet,**
**dass** der Wärmeträgerkreislauf (5) gleichzeitig als Heizkreislauf ausgebildet ist.

3. Vakuum-Sorptionsvorrichtung nach Anspruch 2,
**dadurch gekennzeichnet,**
**dass** der erste Wärmetauscher (1) ausgangsseitig mit dem Heizkreislauf, dieser mit dem zweiten Wärmetauscher (2) eingangsseitig und dieser ausgangsseitig mit dem ersten Wärmetauscher (1) eingangsseitig verbunden ist.

4. Vakuum-Sorptionsvorrichtung nach Anspruch 1, umfassend einen Heizkreislauf (6) mit einem dritten Wärmetauscher (3), wobei der mit einem Wärmeträgermedium befüllten Wärmeträgerkreislauf (5) die Wärmetauscher (1, 2, 3) miteinander verbindet,
**dadurch gekennzeichnet,**
**dass** der dritte Wärmetauscher (3) mittels eines Bypasses (20) aus dem Wärmeträgerkreislauf (5) auskoppelbar ausgebildet ist.

5. Vakuum-Sorptionsvorrichtung nach Anspruch 4,
**dadurch gekennzeichnet,**
**dass** der dritte Wärmetauscher (3) mittels eines Bypasses (16) aus dem Heizkreislauf (6) auskoppelbar ausgebildet ist.

6. Vakuum-Sorptionsvorrichtung nach Anspruch 4 oder 5,
**dadurch gekennzeichnet,**
**dass** der erste Wärmetauscher (1) ausgangsseitig mit dem dritten Wärmetauscher (3) eingangseitig, dieser ausgangsseitig mit dem zweiten Wärmetauscher (2) eingangseitig und dieser ausgangsseitig mit dem ersten Wärmetauscher (1) eingangseitig verbunden ist, wobei der dritte Wärmetauscher (3) - hydraulisch vom Wärmeträgerkreislauf (5) getrennt - mit dem Heizkreislauf (6) verbunden ist.

7. Vakuum-Sorptionsvorrichtung nach einem der Ansprüche 4 bis 6,
**dadurch gekennzeichnet,**
**dass** der Heizkreislauf (6) eine Pumpe (18) aufweist.

8. Vakuum-Sorptionsvorrichtung nach einem der Ansprüche 4 bis 7,
**dadurch gekennzeichnet,**
**dass** der Wärmeträgerkreislauf (5) eine Pumpe (19) aufweist.

## Claims

1. A vacuum sorption device comprising a heat source (8) comprising a first heat exchanger (1), a sorber (4) consisting of a sorption agent which periodically adsorbs or desorbs a refrigerant and a second heat exchanger (2), and a heat transfer medium circuit (5) filled with a heat transfer medium, which connects the heat exchangers (1) and (2) to one another, wherein the first heat exchanger (1) of the heat source (8) has an inlet (9) and an outlet connection (10) and is configured so that it can be coupled out from the heat transfer medium circuit (5) by means of a bypass (7) when the sorber (4) is adsorbing wherein
a hydraulic branch (11, 12) forming the bypass (7) is provided in each case at the inlet (9) and outlet connection (10), a first non-return valve (14) which shuts off in the direction of the heat exchanger (1) is provided at the outlet connection (10) between the branch (12) on the outlet connection side and the heat exchanger (1) and at the bypass (7), a second non-return valve (15) which shuts off in the direction of the inlet connection (9) is provided,
**characterised in**
**that** the first non-return valve (14) has a higher opening pressure compared to the pressure loss via the bypass (7) and that a pump (13) is provided at the inlet connection (9) between the branch (11) on the inlet connection side and the heat exchanger (1).

2. The vacuum sorption device according to claim 1,
**characterised in**
**that** the heat transfer medium circuit (5) is configured at the same time as a heating circuit.

3. The vacuum sorption device according to claim 2,
**characterised in**
**that** the outlet side of the first heat exchanger (1) is connected to the heating circuit, said heating circuit is connected to the inlet side of the second heat exchanger (2) and the outlet side of said second heat exchanger is connected to the inlet side of the first heat exchanger (1).

4. The vacuum sorption device according to claim 1, comprising a heating circuit (6) with a third heat exchanger (3), wherein the heat transfer medium circuit (5) filled with a heat transfer medium connects the heat exchangers (1, 2, 3) to one another,
**characterised in**
**that** the third heat exchanger (3) is configured so that it can be coupled out from the heat transfer medium circuit (5) by means of a bypass (20).

5. The vacuum sorption device according to claim 4,
**characterised in**
**that** the third heat exchanger (3) is configured so that it can be coupled out from the heating circuit (6) by means of a bypass (16).

6. The vacuum sorption device according to claim 4 or 5,
**characterised in**
**that** the outlet side of the first heat exchanger (1) is connected to the inlet side of the third heat exchanger (3), the outlet side of said third heat exchanger is connected to the inlet side of the second heat exchanger (2) and the outlet side of said second heat exchanger is connected to the inlet side of said first heat exchanger (1), wherein the third heat exchanger (3) is connected to the heating circuit (6) hydraulically separated from the heat transfer medium circuit (5).

7. The vacuum sorption device according to any one of claims 4 to 6,
**characterised in**
**that** the heating circuit (6) has a pump (18).

8. The vacuum sorption device according to any one of claims 4 to 7,
**characterised in**
**that** the heat transfer medium circuit (5) has a pump (19) .

## Revendications

1. Dispositif de sorption à vide, comprenant une source de chaleur (8) avec un premier échangeur de chaleur (1), un dispositif de sorption constitué d'un agent de sorption et d'un deuxième échangeur de chaleur (2), adsorband ou désorbant périodiquement un agent de refroidissement, et un circuit caloporteur (5) rempli d'un agent caloporteur et reliant entre eux les échangeurs de chaleur (1, 2), le premier échangeur de chaleur (1) de la source de chaleur (8) comportant un raccordement d'entrée (9) et un raccordement de sortie (10) et étant conçu de manière à pouvoir être désaccouplé du circuit caloporteur (5) au moyen d'une conduite dérivation (7), dans lequel
une bifurcation hydraulique (11, 12) constituant la conduite de dérivation (7) est prévue respectivement sur le raccordement d'entrée (9) et le raccordement de sortie (10), un premier clapet de retenue (14) pour le verrouillage en direction de l'échangeur de chaleur (1) est prévu sur le raccordement d'entrée (10) entre la bifurcation (12) du côté du raccordement de sortie et l'échangeur de chaleur (1), et un deuxième clapet de retenue (15) pour le verrouillage en direction du raccordement d'entrée (9) est prévu sur la conduite de dérivation (7),
**caractérisé en ce que**
le premier clapet de retenue (14) comporte une pression d'ouverture supérieure à la perte de pression causée par la conduite de dérivation (7), et **en ce qu'**une pompe (13) est prévue entre la bifurcation (11) du côté du raccordement d'entrée (11) et l'échangeur de chaleur (1).

2. Dispositif de sorption à vide selon la revendication 1,
**caractérisé en ce que**
le circuit caloporteur (5) est simultanément conçu comme un circuit de chauffage.

3. Dispositif de sorption à vide selon la revendication 2,
**caractérisé en ce que**
le premier échangeur de chaleur (1) est relié côté sortie au circuit de chauffage, celui-ci est relié au côté entrée du deuxième échangeur de chaleur (2) et celui-ci est relié côté sortie au premier échangeur de chaleur (1) côté entrée.

4. Dispositif de sorption à vide selon la revendication 1, comprenant un circuit de chauffage (6) avec un troisième échangeur de chaleur (3), le circuit caloporteur (5) rempli d'un agent caloporteur reliant entre eux les échangeurs de chaleur (1, 2, 3),
**caractérisé en ce que**
le troisième échangeur de chaleur (3) est conçu de manière à pouvoir être désaccouplé du circuit caloporteur (5) au moyen d'une conduite de dérivation (20).

5. Dispositif de sorption à vide selon la revendication 4,
**caractérisé en ce que**
le troisième échangeur de chaleur (3) est conçu de manière à pouvoir être désaccouplé du circuit de chauffage (6) au moyen d'une conduite de dérivation (16).

6. Dispositif de sorption à vide selon la revendication 4 ou 5,
**caractérisé en ce que**
le premier échangeur de chaleur (1) est relié côté sortie au troisième échangeur de chaleur (3) côté entrée, celui-ci est relié côté sortie au deuxième échangeur de chaleur (2) côté entrée, et celui-ci est relié côté sortie au premier échangeur de chaleur (1) côté entrée, le troisième échangeur de chaleur (3) - séparé hydrauliquement du circuit caloporteur (5) - étant relié au circuit de chauffage (6).

7. Dispositif de sorption à vide selon l'une des revendications 4 à 6,
**caractérisé en ce que**
le circuit de chauffage (6) comporte une pompe (18).

8. Dispositif de sorption à vide selon l'une des revendications 4 à 7,
**caractérisé en ce que**
le circuit caloporteur (5) comporte une pompe (19).
